# FASCICULE DE BREVET EUROPEEN

(11) **EP 2 039 159 B1**
(45) Date de publication et mention de la délivrance du brevet: **15.12.2010**
(21) Numéro de dépôt: 07730102.6
(22) Date de dépôt: 13.06.2007
(51) Int. Cl.: H04N 7/173, H04N 5/00

(54) **PROCEDE D'AFFICHAGE D'UNE IMAGE MOSAÏQUE AU SEIN D'UN RECEPTEUR POUR LA SELECTION DE PROGRAMMES AUDIOVISUELS, RECEPTEURS ET SERVEURS ASSOCIES**
VERFAHREN ZUM ANZEIGEN EINES MOSAIKBILDES IN EINEM EMPFÄNGER ZUR AUSWAHL AUDIOVISUELLER PROGRAMME, EMPFÄNGER UND DIESBEZÜGLICHE SERVER
METHOD FOR DISPLAYING A MOSAIC IMAGE IN A RECEIVER FOR THE SELECTION OF AUDIOVISUAL PROGRAMS, RECEIVERS AND RELATED SERVERS

(30) Priorité: 15.06.2006 FR 0652141
(43) Date de publication de la demande: 25.03.2009
(73) Titulaire: Thomson Licensing, 92130 Issy-les-Moulineaux (FR)
(72) Inventeur: HENRY, Jean-Baptiste, F-35520 Melesse (FR)
(74) Mandataire: Benezeth, Philippe J.L. M.
(86) Numéro de dépôt international: PCT/EP2007/055787
(87) Numéro de publication internationale: WO 2007/144361

(56) Documents cités:
- FR-A1- 2 812 160
- US-A1- 2005 028 203

## Description

L'invention concerne un procédé d'affichage d'une image mosaïque personnalisées à un utilisateur au sein d'un récepteur audiovisuel et un récepteur audiovisuel muni d'un tel procédé d'affichage.

De nos jours, un réseau de diffusion numérique transmet des programmes audiovisuels destinés à être visualisés sur des récepteurs audiovisuels, et des informations de service permettant notamment de sélectionner les programmes, par exemple à l'aide d'un Guide Electronique de Programmes. Le brevet FR2 713 427 déposé par la demanderesse et publié le 9 juin 1995 décrit un Procédé d'affichage d'une image mosaïque et de sélection de programme grâce à cette image. Selon cet art antérieur, le diffuseur émet une image mosaïque composée de petites images ou « imagettes », chaque imagette identifiant graphiquement un programme actuellement diffusé, et une table de correspondance permettant d'associer le programme diffusé et la position de l'imagette dans l'image mosaïque. Le contenu visuel de l'imagette représente généralement l'image actuellement diffusée dans le programme audiovisuel transmis par un canal analogique ou un service numérique. Les images mosaïques sont transmises dans un flux vidéo généré par le diffuseur de programmes. Elles sont produites en réduisant la taille des images provenant de plusieurs sources vidéo et en les assemblant. L'application au sein du récepteur audiovisuel détecte la réception d'une image mosaïque et l'affiche sur l'écran. L'utilisateur sélectionne une imagette en déplaçant un curseur à l'aide des touches de direction ce qui a pour effet de mettre en évidence l'imagette (en faisant apparaître un cadre, ou en lui appliquant une surbrillance, ou encore en la faisant clignoter). Puis l'utilisateur appuie sur la touche d'activation (touche généralement appelée « OK »), l'application recherche alors dans la table de correspondance les paramètres de diffusion du programme associé à cette imagette.

Dans le domaine numérique, les paramètres sont la référence du canal de diffusion et les valeurs des PID du flux audiovisuel. Le réseau (terrestre, satellite ou câble) diffuse des programmes audiovisuels plus communément appelés « services » et des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI). Dans le domaine analogique, on peut identifier le canal par sa fréquence. Avec ces paramètres, l'application programme le démodulateur et/ou le filtre du récepteur audiovisuel pour extraire les signaux et les afficher sur un écran.

L'image mosaïque étant conçue au niveau du diffuseur, le récepteur peut l'afficher immédiatement sans avoir besoin de lui faire subir de traitement particulier. Tous les récepteurs audiovisuels reçoivent la même image mosaïque. Il n'est donc pas possible de personnaliser cette image en fonction par exemple des préférences de l'utilisateur. Le diffuseur envoie des images mosaïques d'un ensemble de programmes diffusés selon un ordre déterminé par lui. Au niveau du récepteur, l'application ne peut pas paramétrer l'affichage selon les voeux de l'utilisateur. L'image mosaïque comporte donc des imagettes de tous les programmes diffusés, y compris ceux que l'utilisateur ne sélectionne jamais et dans un ordre qui a peu de chance d'être celui de ses préférences.

Le brevet FR 2 812 160, publié le 25 janvier 2002 permet à un utilisateur d'un décodeur de constituer lui-même et selon ses affinités une image mosaïque. L'image mosaïque est élaborée au niveau du décodeur à partir d'une sélection introduite par l'utilisateur. De cette façon, l'utilisateur choisit les services qu'il souhaite voir dans l'image mosaïque. Une application interne au décodeur récupère les données transmises dans différents flux et élabore une image mosaïque à partir de ces données. Mais il n'est pas toujours possible pour un récepteur de récupérer des données audiovisuelles transmises par plusieurs services et canaux hertziens différents, pour les assembler en temps réel afin de produire une image mosaïque.

Le document US 2005/0028203, publié le 23 février 2005, divulgue un système de réception de données dans un décodeur et une application pour sélectionner des programmes audiovisuels grâce à la diffusion d'une image mosaïque. Le but de cette invention est d'entendre le contenu audio du programme qui est sélectionné dans l'image mosaïque. La solution décrite consiste à rechercher dans les tables du DVB-SI, les paquets de données qui transportent la composante audio du canal sélectionné par l'utilisateur. Les paquets de données sont ensuite décodés et le son est reproduit.

Le document W02004/107749 enseigne un système permettant de sélectionner des contenus multimédia et des publicités à partir d'une matrice hiérarchique NxM de cellules d'affichage. La composante d'interface assure à l'utilisateur une présentation et une navigation via une hiérarchie de palettes d'affichage, d'éléments multimédia et de publicité ciblée sur un éventail de plates-formes, du type télévision, ordinateurs personnels, assistants numériques et téléphones cellulaires. L'interface utilisateurs assure aussi la collecte de données relatives à l'utilisation et fournit les données à un serveur afin de préparer l'organisation des palettes d'affichages.

La présente invention propose une nouvelle interface utilisateur permettant d'afficher une image mosaïque personnalisée en fonction des choix de l'utilisateur au niveau d'un récepteur, elle est définie par les revendications.

L'image mosaïque personnalisée utilise des ressources graphiques déportées, ce qui soulage le récepteur de cette tâche.

Le serveur élabore un flux d'image mosaïque et émet les données de flux vers le récepteur. De cette façon, le récepteur reçoit un flux continu d'image mosaïque et n'a plus besoin d'envoyer continuellement des requêtes.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 présente un diagramme bloc d'un récepteur audiovisuel pour la mise en oeuvre d'un exemple de réalisation de l'invention,
- la figure 2 présente une image mosaïque comprenant quatre petites images représentant des canaux ou des services,
- la figure 3 est un schéma montrant les différents éléments d'un serveur selon l'invention,
- la figure 4 illustre les principaux échanges entre le récepteur de l'utilisateur et le serveur, selon un exemple.

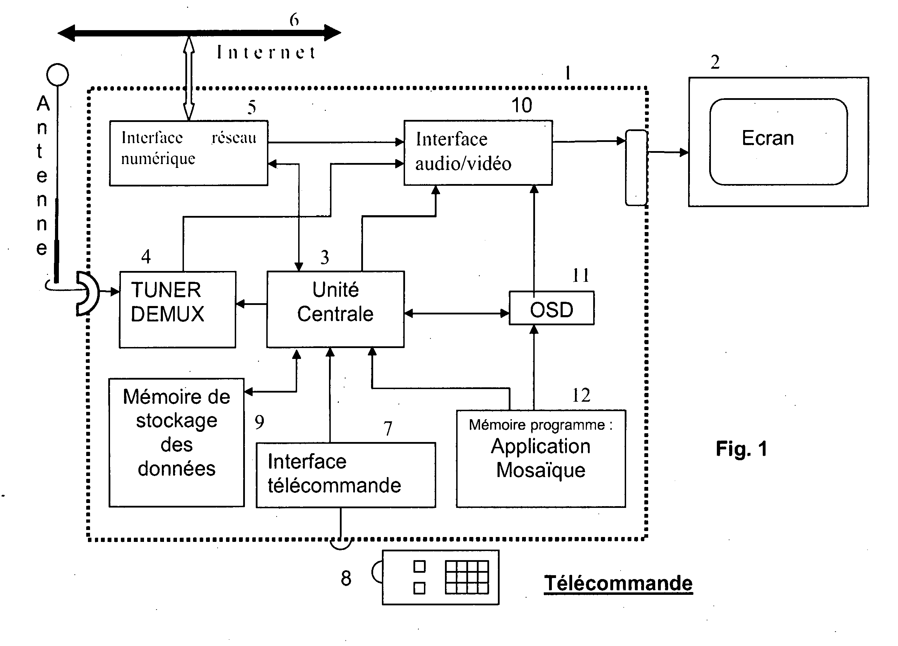

A l'aide de la figure 1, on décrira tout d'abord le fonctionnement d'un récepteur audiovisuel 1 connecté à un dispositif d'affichage 2. Le récepteur audiovisuel 1, par exemple un décodeur appelé en Anglais « Set top box », comprend une unité centrale 3 reliée à une mémoire de programme 12, des moyens de réception tels qu'un démodulateur 4 et un démultiplexeur pour recevoir des données audio/vidéo d'un réseau de diffusion à travers une antenne de réception. Le récepteur 1 est de façon privilégiée de type numérique et reçoit des services audiovisuels numériques, l'invention est également utilisable dans un récepteur de type analogique recevant des chaînes diffusées par des canaux hertziens. En variante, le récepteur 1 peut être doté d'une interface 5 pour la communication avec un réseau numérique 6 à accès large bande (« broadband » en Anglais) permettant de transmettre des données audio/vidéo en temps réel. Ce réseau est par exemple Internet. L'unité centrale doit posséder une puissance de traitement élevé pour réaliser un traitement d'image rapide, par exemple 200 Mips. Le récepteur 1 comprend en outre une interface de signaux infrarouge 7 pour recevoir les signaux d'une télécommande 8, une mémoire 9 pour le stockage des données de service, et une logique de décodage audio/vidéo 10 pour la génération des signaux audiovisuels envoyés à l'écran de télévision 2. La télécommande 8 est dotée des touches de direction : ↑, ↓, →, ← et de la touche : « OK » dont nous verrons plus tard les rôles.

Le récepteur 1 comprend également un circuit 10 pour l'affichage direct des émissions audiovisuelles reçues par le réseau de diffusion ou par le bus numérique 6 et, un circuit 11 d'incrustation de données, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et des images, et qui permet d'afficher les différents écrans conformément à la présente invention. Le circuit OSD est contrôlé par l'Unité Centrale 3 et une application mosaïque contenue dans la mémoire 12. Cette application est soit résidente dans une mémoire ROM, soit téléchargée et enregistrée dans une mémoire inscriptible. Une variante consiste en ce que l'application mosaïque est réalisée sous la forme d'un circuit spécialisé de type ASIC par exemple.

Le réseau (terrestre, satellite ou câble) diffuse des programmes audiovisuels plus communément appelés « service » et des données destinées à les référencer. Ces données de service sont par exemple définies dans les spécifications DVB-SI citées en préambule. Elles se présentent sous la forme de tables et de descripteurs qui décrivent les objets émis sur le réseau de diffusion. Parmi les tables définies par le standard DVB-SI, la table SDT donne des informations supplémentaires relatives aux services, par exemple le nom en clair d'un service. Selon un exemple préféré de réalisation, la table SDT transmet une table de correspondance spécifiant les URL d'accès aux informations mosaïque en fonction des services audiovisuels. Voici un exemple d'une table de correspondance :

**TABLEAU 1**

| Service | URL image | URL audio |
|---|---|---|
| 101 | http://tV1.com/image | http://TV1.com/audio |
| 103 | http://Chan2.com/image | http://Chan2.com/audio |
| 202 | http://HD3.com/image | http://HD3.com/audio |
| 205 | http://Canal4.com/image | http://Canal4.com/audio |
| 281 | http://Télé.com/image | http://Télé5.com/audio |

En lisant la table de correspondance, le récepteur peut lancer via Internet une requête à l'URL spécifiée, demander à recevoir les données visuelles susceptible d'être utilisées pour constituer l'image mosaïque, et éventuellement à recevoir un flux audio d'une chaîne ou d'un service numérique. Si le récepteur 1 est de type analogique, l'identification de la chaîne est la fréquence du canal de diffusion.

Avantageusement, la table de correspondance est transmise sur tous les services de façon que quel que soit le service sélectionné par l'utilisateur, le décodeur puisse le recevoir. La dernière table reçue remplace la précédente stockée dans la mémoire 9 du récepteur. Supposons que l'application mosaïque affiche quatre images, voici un exemple de table en mémoire 9 :

**TABLEAU 2**

| Localisation de l'image | Service | URL image | URL audio |
|---|---|---|---|
| 1.1 | 101 | http://TV1.com/ image | http://TV1.com/ audio |
| 2.1 | 103 | http://Chan2.com/ image | http://Chan2.com/ audio |
| 1.2 | 202 | http://HD3.com/ image | http://HD3.com/ audio |
| 2.2 | 281 | http://Télé5.com/ image | http://Télé5.com/ audio |

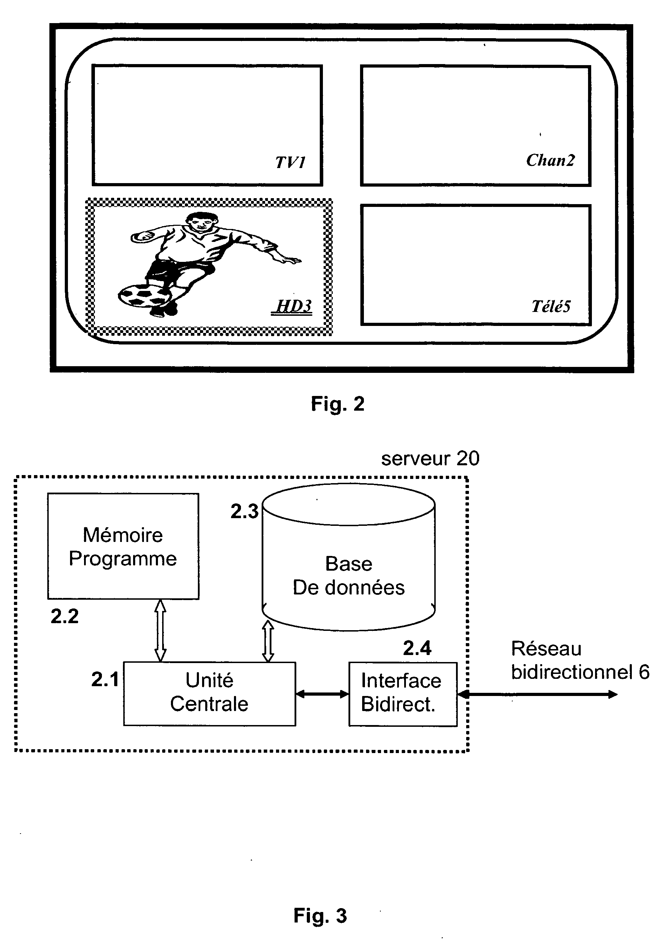

La figure 2 montre une apparence d'écran affichant une image mosaïque avec quatre images respectivement associées aux canaux : « TV1 », « Chan2 », « HD3 », « Télé5 ». Dans le tableau 2, la première colonne détermine la localisation de l'image au sein de l'image mosaïque. Le premier chiffre exprime le numéro de la colonne en partant de la gauche, le second chiffre est celui de la rangée en partant du haut de l'image.

Le récepteur 1 communique à travers son interface de communication 5, via le réseau 6, avec un ou plusieurs serveurs de communication 20 dont un exemple de réalisation est décrit par la figure 3. Un serveur 20 comporte une unité centrale 2.1, une mémoire de programme 2.2 comprenant un programme d'encodage, une base de données 2.3 contenant les données audiovisuelles à diffuser et une interface de communication réalisant une pluralité de liaisons bidirectionnelles 2.4 à travers le réseau 6 avec les récepteurs décrits précédemment. Le serveur 20 reçoit d'un diffuseur l'ensemble des chaînes et canaux du bouquet de programmes. Selon un exemple ne correspondant pas à l'invention, la tête du réseau produit un flux basse résolution et la transmet à la logique d'encodage 2.3 du serveur. Ce flux réduit transmet des images utilisables pour réaliser une image mosaïque de programmes. Dans l'exemple illustré par le tableau 2, l'image mosaïque comporte quatre images. L'utilisateur détermine lui-même la position des images au sein de l'image mosaïque à l'aide d'un programme de gestion d'écran graphique bien connu de l'homme du métier.

Après avoir décrit les différents éléments, nous allons maintenant expliquer comment ceux-ci coopèrent, selon un exemple ne correspondant pas à l'invention.

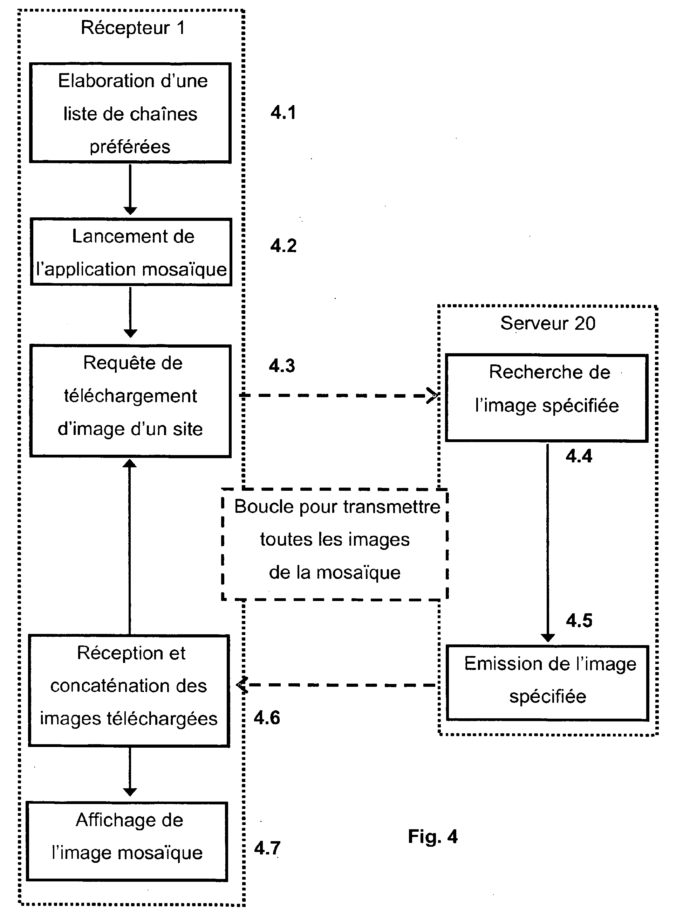

Le déroulement des différents échanges est illustré par la figure 4. A l'étape 4.1, le récepteur 1 élabore la liste des chaînes ou services audiovisuels identifiés par des images au sein de son image mosaïque personnelle. La liste peut être introduite par des sélections de l'utilisateur dans un Guide Electronique de Programme. Une autre façon de faire consiste à utiliser un profil utilisateur, la liste comprenant les chaînes ou services audiovisuels les plus souvent sélectionnés par l'utilisateur.

Puis l'utilisateur lance l'application mosaïque (étape 4.2) en introduisant une commande. L'application lit le contenu de la table et lance toutes les requêtes pour télécharger des images en provenance des sites se terminant par « /image » et dont l'URL est décrit par la table en mémoire. Dans l'exemple d'une image mosaïque de 4 images, l'application mosaïque lance les quatre requêtes suivantes :
- Req (http://TV1.com/ image)
- Req (http://Chan2.com/ image)
- Req (http://HD3.com/ image)
- Req (http://télé5.com/ image)

Les serveurs 20 associés à chaque site reçoivent les requêtes à l'étape 4.4 et recherchent dans la base de données 2.3 les données visuelles. Ces données visuelles sont ensuite émises vers le récepteur 1 qui en a fait la demande (étape 4.5).

Le récepteur 1 attend les réponses à ses requêtes. Les serveurs représentant les quatre sites renvoient une image sous la forme JPEG. (étape 4.4).

Une fois les données visuelles reçues, elles sont d'abord décodées afin de réaliser des images aux dimensions des zones de la mosaïque. Puis, l'application mosaïque agrége les quatre images ainsi formées en les plaçant selon la localisation spécifiée dans le tableau 2 :
l'image provenant de (http:l/tV1.com/ image ) en haut à gauche,
l'image provenant de (http://Chan2.com/ image ) en haut à droite,
l'image provenant de (http://HD3.com/ image) en bas à gauche,
l'image provenant de (http://Télé5.com/ image) en bas à droite.

L'image mosaïque ainsi produite au niveau du récepteur 1 est transmise au moyen d'affichage et affiché sur l'écran 2 (étape 4.7).

Afin d'assurer une mise à jour régulière de l'image mosaïque, l'application mosaïque répète en boucle les étapes 4.3, 4.4, 4.5 et 4.6. Pour cela, les requêtes de téléchargement d'image sont émises vers les différents sites à des intervalles de temps réguliers. Le récepteur 1 émet une requête de réception d'une image vers un site dès qu'il a reçu l'image provenant de la précédente requête vers ce site. Le récepteur exécute autant de tâches en parallèle qu'il y a d'image dans la mosaïque. La mise à jour des images va s'effectuer de façon aléatoire au gré de la bande passante du réseau et de la disponibilité des images sur les sites. Il est possible d'éviter la mise à jour irrégulière des images en relançant le carrousel de requêtes à intervalles de temps réguliers, par exemple chaque seconde. Les temps de réponses pour chaque site peuvent varier, la réception des données s'effectue de façon asynchrone. Si l'affichage intervient immédiatement après la réception, la mise à jour de l'image mosaïque sera saccadée. Un perfectionnement consiste à attendre que toutes les données visuelles permettant de constituer une image mosaïque soient reçues dans le récepteur 1, puis à réaliser l'image mosaïque et à la mémoriser temporairement. Les images mosaïques ainsi mémorisées sont ensuite affichées à des intervalles de temps réguliers. Dans l'exemple cité plus haut, chacune des quatre images reçues est incorporée dans l'image mosaïque. De cette façon, le cadencement de l'affichage s'affranchit du moment de réception des données visuelles. Un perfectionnement consiste à réaliser un décalage temporel entre les données reçues et leurs affichages au sein de l'image mosaïque. Ce décalage, typiquement de 3 à 5 secondes, permet d'assurer un affichage régulier en s'affranchissant des temps de réponses aux requêtes.

Une variante consiste à réaliser une image mosaïque lors de chaque réception de données visuelles et à l'afficher, éventuellement après une mémorisation temporaire permettant un cadencement régulier de l'affichage. De cette façon, pour une nouvelle image mosaïque complète, l'affichage est modifié quatre fois ce qui paraît plus distrayant pour l'utilisateur. Dans l'exemple d'une image mosaïque constituée de quatre images reçues chaque seconde, l'image mosaïque est rafraîchie tous les quarts de secondes.

L'affichage et la mise à jour de l'image mosaïque continue jusqu'à ce que l'utilisateur interrompt le processus, soit en éteignant son appareil, soit en sélectionnant une image afin de visualiser la chaîne ou le service correspondant, soit tout simplement en fermant l'application mosaïque.

Un perfectionnement consiste à recevoir en plus des données visuelles, le flux audio correspondant à la chaîne ou au service mis en évidence dans l'image mosaïque. A l'aide des touches de direction ↑, ↓, →, ← l'utilisateur peut mettre en évidence une image de la mosaïque, et en appuyant sur la touche : « OK », l'image de cette chaîne ou service apparaît en plein écran. Cela correspond à l'action de sélectionner le service en question. L'application mosaïque lit le tableau 1 et recherche le site diffusant le flux audio correspondant à la chaîne ou au service dont l'image est mise en évidence et lance une requête pour établir un flux continu émis par ce site. Le décodeur se connecte alors au site audio diffusant un flux, par exemple grâce à une émission de données en multicast, et demande l'ouverture d'une communication, par exemple une session de type RTSP. Le protocole de session définit par un standard Internet, par exemple le RFC 2326 pour RTSP, définit le contrôle (établissement, actions et fin) d'un client sur un serveur de contenu (ici le flux audio envoyé vers le décodeur). Les données audio sont décodées et le son est envoyé vers des haut-parleurs, en les synchronisant autant que possible avec l'affichage des images émises par le site image. Le récepteur 1 envoie une requête pour terminer l'émission du flux audio lorsque l'application mosaïque est fermée.

Un perfectionnement consiste à remplacer les requêtes de réception de données visuelles de la chaîne ou du service mis en évidence dans l'image mosaïque par le flux vidéo de cette chaîne ou service. L'application mosaïque détermine l'image mise en évidence et lit le tableau 1 afin de rechercher le site diffusant le flux vidéo correspondant à la chaîne ou au service dont l'image est mise en évidence. Puis, l'application mosaïque lance une requête pour établir un flux continu émis par ce site. Un seul site suffit, par exemple http://www.tf1.org/, la requête est dirigée vers différents chemins dans ce site, les URL des chemins ayant le suffixe « /image » ou « /audio ». Typiquement, pour un site il existe trois URL : une pour les images (suffixé par : /image), une pour l'audio (suffixé par /audio), une pour la vidéo (suffixé par /vidéo).

Un perfectionnement consiste à disposer de différentes URL selon la définition de l'image : « / vidéo/100pixels » et « / vidéo/200pixels ». Ce perfectionnement concerne aussi bien des requêtes d'images, que des requêtes de flux, dans ce dernier cas, la vidéo reçue est plus ou moins dégradée. La transmission s'effectue de la même manière que pour le flux audio. Les données vidéo sont décodées et incrustées dans la partie de l'image mosaïque mise en évidence par l'utilisateur. Les données vidéo du flux sont avantageusement au format MPEG, ce qui garantit l'émission d'un flux continu. L'émission d'une requête de réception d'un flux vidéo s'effectue à chaque changement de position de la distinction graphique, une requête de fin d'émission étant envoyée quand la distinction graphique quitte l'image. Lorsque l'utilisateur ferme l'application mosaïque, celle-ci envoie une requête pour terminer l'émission du flux vidéo. Selon un autre perfectionnement, le récepteur 1 reçoit un flux d'image en basse résolution. Ce type d'image est compatible au petit format d'image de la mosaïque. De plus, sa résolution ne permet pas de l'afficher correctement en plein écran sur le moyen d'affichage 2, il est donc inutile de conditionner l'émission des données visuelles d'un contrôle d'accès payant. Ce perfectionnement est particulièrement avantageux dans la mesure où la transmission de données visuelles en basse résolution optimise la bande passante.

Selon une variante, les informations audio et/ou vidéo de la chaîne ou du service mis en évidence dans l'image mosaïque sont reçues au travers d'un réseau de diffusion. Par exemple, les informations sont reçues par des moyens de réception tels qu'un démodulateur 4 et un démultiplexeur permettant de recevoir des données audio/vidéo du réseau de diffusion. Cette variante présente l'avantage de ne pas consommer de la bande passante du réseau numérique 6. De plus, les informations reçues du réseau de diffusion sont directement exploitables lorsque l'utilisateur sélectionne le canal ou le service en appuyant sur la touche « OK ». L'image de la chaîne sélectionnée est immédiatement en plein écran.

Selon une variante, le serveur 20 délivre autant de flux vidéo qu'il y a d'image dans la mosaïque. De cette façon, le récepteur 1 affiche un certain nombre de flux vidéo dans la mosaïque garantissant ainsi la mise à jour et un grand confort visuel. Avantageusement, les flux vidéo transmis par le serveur sont des flux dégradés, mais c'est suffisant puisque les images apparaissent en petit format.

Selon un exemple de réalisation de l'invention, la liste de canaux composant l'image mosaïque est transmise par le récepteur 1 au serveur 20 via le réseau numérique 6. Le serveur se charge à la place du récepteur 1 de collecter les images, et de générer une image globale correspondant à l'image mosaïque requise par un récepteur 1. Pour cela, le récepteur 1 envoie d'abord une requête contenant la carte de la mosaïque souhaitée au serveur 20. Celui-ci recherche alors les images des différents canaux ou services sélectionnés par l'utilisateur, compose une image mosaïque et la transmet au récepteur 1. Le récepteur 1 applique la distinction graphique sur une zone de l'image mosaïque reçue. Cette distinction graphique se déplace en fonction des commandes de navigation introduites par l'utilisateur. A l'aide de la table de correspondance illustrée par le tableau 2, l'application peut retrouver à partir de la zone mise en évidence l'URL audio et l'URL vidéo du canal ou du service numérique sélectionné par l'utilisateur. De même que précédemment, l'application mosaïque lance une requête de réception du flux audio de la chaîne ou du service mis graphiquement en évidence. Le flux audio est reçu indépendamment du flux d'image mosaïque.

L'avantage de cette variante réside dans le fait que le récepteur n'a pas besoin d'être équipé de moyens de réalisation d'une image mosaïque, et globalement la quantité de données transmises sur le réseau numérique 6 est optimisée. En effet, au lieu d'envoyer un nombre égal de requête que d'images dans la mosaïque et de recevoir autant de données d'image, une seule requête est suffisante qui entraîne la réception d'un seul paquet d'information d'image. Selon l'invention le serveur 20 élabore un flux d'images mosaïque. Le récepteur lance une requête pour ouvrir auprès du serveur 20 une session de type RTSP pour la transmission d'un flux vidéo diffusant les images mosaïques personnalisées à ce récepteur. Le flux vidéo peut être interrompu par une nouvelle requête du décodeur, par exemple lorsque l'utilisateur sélectionne un canal pour le visualiser en plein écran.

Bien que la présente invention ait été décrite en référence aux modes de réalisation particuliers illustrés, celle-ci n'est nullement limitée par ces modes de réalisation, mais ne l'est que par les revendications annexées.

## Revendications

1. Procédé d'affichage d'une image mosaïque au niveau d'un récepteur audiovisuel (1), ladite image mosaïque étant composée d'une pluralité de petites images identifiant graphiquement des canaux audiovisuels ; comportant une étape d'élaboration au niveau dudit récepteur d'une liste d'au moins deux canaux audiovisuels, **caractérisé en ce qu'**il comporte les étapes suivantes :
- émission (4 .3) par le récepteur (1) vers un serveur (20) d'une requête de réception d'une image mosaïque contenant au moins deux identificateurs identifiant des canaux audiovisuels de la liste,
- agrégation dans le serveur distant (20) de données visuelles provenant de chaque canal identifié par le récepteur afin de créer une image mosaïque contenant les données visuelles des canaux spécifiés dans la requête,
- réception par le récepteur (1) de l'image mosaïque ainsi créée,
- affichage (4.7) de l'image mosaïque reçue sous la forme d'un flux d'images mosaïque reçu par le récepteur (1) du serveur (20), ledit flux pouvant être interrompu par une nouvelle requête émise par le récepteur (1) vers le serveur (20).

2. Récepteur audiovisuel (1) comportant un premier moyen d'élaboration d'une liste d'au moins deux canaux audiovisuels ; **caractérisé en ce qu'**il comporte un moyen de transmission (3, 12, 5) vers un serveur distant a une requête de récepteur d'une image mosaïque contenant d'au moins deux identificateurs identifiant au moins deux canaux audiovisuels de la liste, un moyen de réception (3, 12, 5) d'un flux d'images mosaïque, lesdites images mosaïque étant composée d'une pluralité de petites images identifiant graphiquement les canaux identifiés par le récepteur et un moyen (10, 2) pour afficher lesdites images mosaïque, ledit flux pouvant être interrompu par une nouvelle requête contenant au moins deux identificateurs et émise par le récepteur vers le serveur.

3. Récepteur audiovisuel (1) selon la revendication 2; **caractérisé en ce qu'**il comporte un moyen de mise en évidence graphique (3, 11, 12) d'une image de l'image mosaïque affichée identifiant un canal audiovisuel courant, et un moyen de réception (3, 5,12) du flux audio correspondant à ce canal audiovisuel courant envoyé par le serveur.

4. Récepteur audiovisuel (1) selon la revendication 2; **caractérisé en ce qu'**il comporte une étape de mise en évidence graphique (3, 11, 12) d'une image de l'image mosaïque affichée identifiant un canal audiovisuel courant et un moyen de réception (3, 4, 12) du flux audio correspondant à ce canal audiovisuel courant envoyé par un réseau de diffusion unidirectionnel.

5. Serveur de communication (20) comportant un moyen de communication (2.4) avec un récepteur audiovisuel identifié (1) ; **caractérisé en ce que** le moyen de communication (2.4) reçoit du récepteur audiovisuel une requête de réception d'une imagé mosaïque contenant une liste d'au moins deux identificateurs identifiant au moins deux canaux audiovisuels, un moyen d'agrégation (2.1, 2.2) de données visuelles associées à chaque canal identifié afin de constituer une image mosaïque, ladite image mosaïque étant composée d'une pluralité de petites images contenant les données visuelles des canaux spécifiés dans la requête reçue et identifiant graphiquement les canaux identifiés par la liste reçue, le moyen de communication (2.4) émettant vers le récepteur identifié (1) un flux d'images mosaïque réalisées à des fins d'affichage ledit flux pouvant être interrompu par une nouvelle requête reçue dudit récepteur.

6. Serveur de communication (20) selon la revendication 5; **caractérisé en ce que** le moyen de communication (2.4) reçoit en outre du récepteur audiovisuel un identificateur identifiant un canal audiovisuel courant, et émet en outre un flux audio correspondant à ce canal audiovisuel courant.

## Claims

1. A method of displaying a mosaic image at the level of an audiovisual receiver (1), said mosaic image being composed with a plurality of little pictures graphically identifying audiovisual channels ; comprising a step for generating, at the level of said receiver, a list of at least two audiovisual channels, **characterized in that** it comprises the following steps:
- sending (4.3) par the receiver (1) to a server (20) of a request of receiving of an mosaic image containing at least two identifiers identifying audiovisual channels of the list,
- aggregation in the distant server (20) of visual data producing from each channel identified by the receiver in order to form a mosaic image containing the visual data of of the channels specified in the request,
- reception (4.5) by the receiver (1) of the duly created mosaic image,
- displaying (4.7) of the received mosaic image in the form of a stream of mosaic images received by the receiver (1) from the server (20) , said stream being able to be interrupted by a new request sent by the receiver (1) to the server (20).

2. An audiovisual receiver (1) comprising a first means of generating a list of at least two audiovisual channels; **characterized in that** it comprises a means of transmission (3, 12, 5) to a server of a request of receiving of a request of receiving of an mosaic image containing at least two identifiers identifying at least two audiovisual channels in the list, a means (3, 12, 5) of receiving of stream of mosaic images, said mosaic images being composed with a plurality of little pictures graphically identifying the channels identified by the receiver and a means (10, 2) for displaying said mosaic images, said stream being able to be interrupted by a new request containing at least two identifiers and sent by the receiver to the server.

3. The audiovisual receiver (1) as claimed in claim 2; **characterized in that** it comprises a means of graphically highlighting (3, 11, 12) an image of the mosaic image displayed defining a current audiovisual channel, and a means (3, 5, 12) of receiving the audio stream corresponding to this current audiovisual channel sent by the server.

4. The audiovisual receiver (1) as claimed in claim 2; **characterized in that** it comprises a step for graphically highlighting (3, 11, 12) an image of the mosaic image displayed defining a current audiovisual channel and a means (3, 4, 12) of receiving the audio stream corresponding to this current audiovisual channel sent by a unidirectional transmission network.

5. A communication server (20) comprising a means (2.4) of communicating with an identified audiovisual receiver (1) ; **characterized in that** the communication means (2.4) receives from the audiovisual receiver a request of receiving of an mosaic image containing at least two identifiers identifying at least two audiovisual channels, a means (2.1, 2.2) of aggregating visual data associated with each identified channel in order to form a mosaic image, said mosaic image being composed with a plurality of little pictures containing the visual data of the channels identified in the received request and graphically identifying the channels identified by the received list, the communication means (2.4) transmitting to the identified receiver a stream of mosaic images produced for display purposes, said stream being able to be interrupted by a new request received by the said receiver (1).

6. A communication server (20) as claimed in claim 5; **characterized in that** the communication means (2.4) receives from the audiovisual receiver an identifier identifying a current audiovisual channel, and moreover sends an audio stream corresponding to this current audiovisual channel.

## Patentansprüche

1. Verfahren zum Anzeigen eines Mosaikbilds an einem audiovisuellen Empfänger (1), wobei das Mosaikbild aus einer Vielzahl von kleinen Bildern besteht, die audiovisuelle Kanäle grafisch identifizieren, mit einem Schritt des Erstellens einer Liste von mindestens zwei audiovisuellen Kanälen an dem Empfänger, **dadurch gekennzeichnet, dass** es die folgenden Schritte umfasst:
- Senden (4.3) einer Anfrage von dem Empfänger (1) an einen Server (20) über den Empfang eines Mosaikbilds, das mindestens zwei Identifier enthält, die audiovisuelle Kanäle der Liste identifizieren,
- Clustern von visuellen Daten aus jedem durch den Empfänger identifizierten Kanal in dem entfernten Server (20), um ein die visuellen Daten der in der Anfrage spezifizierten Kanäle enthaltendes Mosaikbild zu erzeugen,
- Empfang des derart erzeugten Mosaikbilds durch den Empfänger (1),
- Anzeige (4.7) des empfangenen Mosaikbilds in Form eines Mosaikbilderflusses, der ausgehend von dem Server (20) durch den Empfänger (1) empfangen wird, wobei der Fluss durch eine neue, von dem Empfänger (1) an den Server (20) gesendete Anfrage unterbrochen werden kann.

2. Audiovisueller Empfänger (1) mit einem ersten Mittel für die Erstellung einer Liste von mindestens zwei audiovisuellen Kanälen, **dadurch gekennzeichnet, dass** er ein Mittel für die Übertragung (3, 12, 5) einer Anfrage über den Empfang eines Mosaikbilds, das mindestens zwei Identifier enthält, die mindestens zwei audiovisuelle Kanäle der Liste identifizieren, zu einem entfernten Server, ein Mittel für den Empfang (3, 12, 5) eines Flusses von Mosaikbildern, wobei die Mosaikbilder aus einer Vielzahl von kleinen Bildern bestehen, welche die durch den Empfänger identifizierten Kanäle grafisch identifizieren, und ein Mittel (10, 2) für die Anzeige der Mosaikbilder aufweist, wobei der Fluss durch eine neue Anfrage unterbrochen werden kann, welche mindestens zwei Identifier enthält und von dem Empfänger an den Server gesendet wird.

3. Audiovisueller Empfänger (1) nach Anspruch 2, **dadurch gekennzeichnet, dass** er ein Mittel für die grafische Hervorhebung (3, 11, 12) eines Bilds des angezeigten Mosaikbilds, welches einen laufenden audiovisuellen Kanal identifiziert, und ein Mittel für den Empfang (3, 5, 12) des Audioflusses, der diesem von dem Server gesendeten laufenden audiovisuellen Kanal entspricht, aufweist.

4. Audiovisueller Empfänger (1) nach Anspruch 2, **dadurch gekennzeichnet, dass** er einen Schritt der grafischen Hervorhebung (3, 11, 12) eines Bilds des angezeigten Mosaikbilds, welches einen laufenden audiovisuellen Kanal identifiziert, und ein Mittel für den Empfang (3, 4, 12) des Audioflusses, der diesem von einem unidirektionalen Rundsendenetz gesendeten laufenden audiovisuellen Kanal entspricht, aufweist.

5. Kommunikationsserver (20) mit einem Kommunikationsmittel (2.4) mit einem identifizierte audiovisuellen Empfänger (1), **dadurch gekennzeichnet, dass** das Kommunikationsmittel (2.4) von dem audiovisuellen Empfänger eine Anfrage über den Empfang eines Mosaikbilds erhält, das eine Liste von mindestens zwei Identifiern enthält, die mindestens zwei audiovisuelle Kanäle identifizieren, wobei der Server ein Mittel zum Clustern (2.1, 2.2) von visuellen Daten, die jedem identifizierten Kanal zugeordnet sind, aufweist, um ein Mosaikbild zu bilden, wobei das Mosaikbild aus einer Vielzahl von kleinen Bildern besteht, welche die visuellen Daten der in der empfangenen Anfrage spezifizierten Kanäle enthalten und die durch die empfangene Liste identifizierten Kanäle grafisch identifizieren, wobei das Kommunikationsmittel (2.4) einen Fluss von für eine Anzeige erzeugten Mosaikbildern an den identifizierten Empfänger (1) sendet, wobei der Fluss durch eine neue, aus dem Empfänger empfangene Anfrage unterbrochen werden kann.

6. Kommunikationsserver (20) nach Anspruch 5, **dadurch gekennzeichnet, dass** das Kommunikationsmittel (2.4) von dem audiovisuellen Empfänger ferner einen Identifier erhält, der einen laufenden audiovisuellen Kanal identifiziert, und ferner einen diesem laufenden audiovisuellen Kanal entsprechenden Audiofluss sendet.
